# EUROPÄISCHE PATENTANMELDUNG

(11) **EP 1 783 479 A2**
(43) Veröffentlichungstag der Anmeldung: **09.05.2007**
(21) Anmeldenummer: 06405459.6
(22) Anmeldetag: 01.11.2006
(51) Int. Cl.: G01N 3/42

(54) **Prüfmaschine zur gewichtsbelasteten Prüfung von Werkstoffen**

(30) Priorität: 03.11.2005 CH 17632005
(71) Anmelder: Gnehm Härteprüfer AG, 8810 Horgen (CH)
(72) Erfinder: Scherer, Georges Ph., 8810 Horgen (CH)
(74) Vertreter: Groner, Manfred

(57) **Zusammenfassung**

Die Prüfmaschine weist ein bewegbares Prüfelement (5) und eine Belastungseinrichtung (4) auf, die mit dem Prüfelement (5) in Verbindung steht und in einer ersten Stellung das Prüfelement (5) nicht belastet und in einer zweiten Stellung dieses belastet. Zum Bewegen des Prüfelements (5) ist ein Direktantrieb vorgesehen, der vorzugsweise einen Drehmomentmotor (Torque Motor) aufweist. Die lineare Bewegung erfolgt mit einer Gewindehülse (15), in die eine Mikrometerschraube (17) eingeschraubt ist.

## Beschreibung

Die Erfindung betrifft eine Prüfinaschine zur gewichtsbelasteten Prüfung von Werkstoffen, mit einem bewegbaren Prüfelement und einer Belastungseinrichtung, die mit dem Prüfelement in Verbindung steht und in einer ersten Stellung das Prüfelement nicht belastet und in einer zweiten Stellung dieses belastet.

Prüfinaschinen der genannten Art sind seit langem bekannt und werden routinemässig insbesondere zur Qualitätssicherung und Abklärung von Fehlerursachen verwendet.

Prüfmaschinen der genannten Art dienen insbesondere zur Eindringhärteprüfung. Der Eindringkörper ist an einem Gestell bewegbar gelagert, wobei zur Übertragung der Belastung auf den Eindringkörper ein am Träger des Eindringkörpers angreifendes Hebelsystem vorhanden ist.

Die EP 0 432 131 A offenbart einen Eindringhärteprüfer, der einen Motor aufweist, der über ein hoch untersetztes Getriebe auf ein Hebelsystem wirkt, an dem ein Eindringkörper angebracht ist.

Bei den bekannten Prüfinaschinen besteht die Schwierigkeit, dass die Testfläche genau horizontal ausgerichtet werden muss. Entsprechend muss die Prüfmaschine genau vertikal ausgerichtet werden. Diese Prüfinaschinen sind zudem in der Regel ausserordentlich schwer und unbeweglich, weshalb in vielen Fällen eine Prüfung nicht möglich ist oder der Prüfling aufwendig transportiert werden muss.

Der Erfindung liegt die Aufgabe zugrunde, eine Prüfmaschine der genannten Art zu schaffen, welche die oben genannten Nachteile vermeidet. Die Prüfmaschine soll insbesondere einfacher positionierbar sein und trotzdem die üblichen Normen bzw. Standards erfüllen.

Die Aufgabe ist bei einer gattungsgemässen Prüfmaschine dadurch gelöst, dass die Belastungseinrichtung zum Bewegen des Prüfelementes einen Direktantrieb aufweist. Bei der erfindungsgemässen Prüfmaschine erfolgt die Zustellung des Prüfelementes direkt mit einem Direktantrieb. Ein Hebelsystem und auch aufwendige Getriebe werden dadurch vermieden. Eine horizontale bzw. genaue vertikale Ausrichtung ist nicht erforderlich, so dass Oberflächen in jedem Winkel geprüft werden können. Die erfindungsgemässe Prüfmaschine kann sehr kompakt und modular ausgebildet werden. Sie kann auswechselbar sein, so dass sie beispielsweise zur Durchführung einer Prüfung an einer Bohrmaschine oder Werkzeugmaschine befestigt werden kann.

Nach einer Weiterbildung der Erfindung ist vorgesehen, dass der Direktantrieb einen Drehmomentmotor aufweist. Dieser Drehmomentmotor, auch "Torque Motor" genannt, ermöglicht eine sehr kompakte und leichte Ausführung. Nach einer Weiterbildung der Erfindung ist vorgesehen, dass der Direktantrieb ein Mikrometergewinde aufweist, mit dem das Prüfelement linear bewegbar ist. Mit dem Mikrometergewinde wird eine Drehbewegung insbesondere des Rotors des Drehmomentmotors in eine lineare Bewegung übergeführt. Dies erfolgt in konstruktiv besonders vorteilhafter Weise dadurch, dass die Prüfinaschine ein Gehäuse aufweist, an dem ein Träger befestigt ist, in dem eine Gewindehülse drehbar gelagert ist, in welche eine Mikrometerschraube eingedreht ist.

Am genannten Träger ist gemäss einer Weiterbildung der Erfindung ein Halter gelagert, der in den Richtungen der genannten Mikrometerschraube verschiebbar ist und der fest mit der Mikrometerschraube verbunden ist. Der Halter wirkt gemäss einer Weiterbildung der Erfindung mit einer Kraftmesseinrichtung, insbesondere einer Kraftmessdose zusammen. Diese Kraftmessdose ist fest mit einem Träger für das Prüfelement verbunden.

Das Prüfelement ist insbesondere ein Eindringkörper für ein Prüfverfahren nach Vickers, Rockwell oder Brinell. Entsprechend ist der Eindringkörper als Kugel, Pyramide, Kegel oder Doppelkegel ausgebildet.

Nach einer Weiterbildung der Erfindung weist die Prüfinaschine einen Schwenkantrieb auf, dessen Drehachse parallel und im Abstand zu einer Drehachse des Direktantriebes angeordnet ist. Damit kann eine Kamera oder ein anderes geeignetes Aufnahmegerät in eine Position verschwenkt werden, indem der Eindruck des Prüfelementes erfasst und beispielsweise die Eindruckdiagonale gemessen werden kann.

Nach einer Weiterbildung der Erfindung ist vorgesehen, dass die erfindungsgemässe Prüfinaschine Befestigungsmittel zur lösbaren Befestigung beispielsweise am Gestell einer Bohrmaschine oder einer Werkzeugmaschine aufweist. Beispielsweise können solche Befestigungsmittel mit einem Befestigungskonus oder einem Befestigungsschaft einfach realisiert werden. Dadurch ist es möglich, eine Prüfung beispielsweise in einer Bohrmaschine oder in einer Werkzeugmaschine durchzuführen.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: ein Schnitt durch eine erfindungsgemässe Prüfmaschine und
- Figur 2: schematisch ein Gestell mit einer erfindungsgemässen Prüfinaschine.

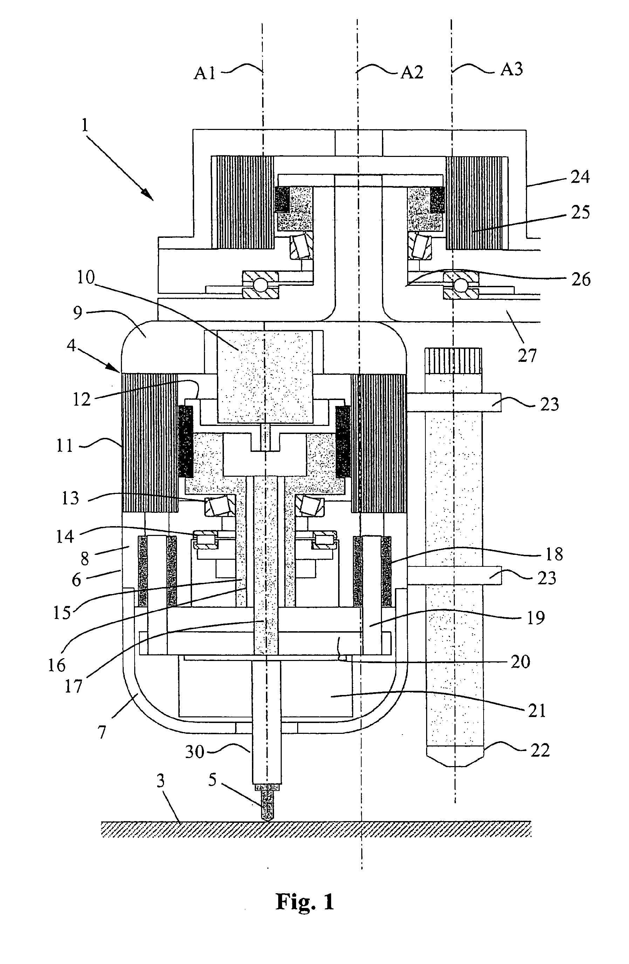

Die in der Figur 1 gezeigte Prüfinaschine 1 ist beispielsweise über einem Fuss 29 eines Gestells 2 befestigt. Das Gestell 2 ist in der gezeigten Ansicht etwa G-förmig und besitzt die entsprechende Stabilität. Die Prüfmaschine 1 dient insbesondere zur Eindringshärteprüfung eines Prüflings 3, der aus metallischem oder nicht metallischem Werkstoff hergestellt sein kann und der beispielsweise eine Kurbelwelle, ein Bodenbelag oder ein Leitungsrohr oder dergleichen ist. Das Gestell kann auch das Gestell einer Bohrmaschine oder einer Werkzeugmaschine sein, an dem die Prüfmaschine 1 auswechselbar befestigt ist. Hierzu ist die Prüfinaschine 1 beispielsweise mit einem hier nicht gezeigten Befestigungskonus versehen.

Wie die Figur 1 zeigt, weist die Prüfinaschine 1 ein Gehäuse 6 auf, das einen Gehäuseunterteil 7, einen Gehäuseoberteil 9 und zwischen diesen einen Träger 8 aufweist. An dem beispielsweise kreiszylindrisch ausgebildeten Träger 8 sind innenseitig zwei Führungshülsen 18 befestigt, in denen jeweils eine Führungsstange 19 verschiebbar gelagert ist. An den beiden Führungsstangen 19 ist ein Halter 20 befestigt, an dem seinerseits eine Gewindespindel 17 und insbesondere eine Mikrometerschraube befestigt ist. Der Halter 20 wirkt auf eine Kraftmessdose 21, die sich unter Last verformt und piezoelektrisch ein Stromsignal abgibt. Solche Kraftmessdosen sind dem Fachmann an sich gut bekannt. Mit der Kraftmessdose 21 ist ein Träger 30 fest verbunden, an dem ein Prüfelement 5 angebracht ist.

Zur Bewegung des Halters 20 ist ein Antrieb 4 vorgesehen, der insbesondere als Drehmomentmotor (Torque Motor) ausgebildet ist. Dieser besitzt ein Statormagnet 11 mit beispielsweise zweiundzwanzig Polen, der fest mit dem Träger 8 verbunden ist. Im Statormagnet 11 ist ein Rotor 12 gelagert, der in an sich bekannter Weise ausgebildet und mit einer Gewindehülse 15 verbunden ist. Diese Gewindehülse 15 ist koaxial zur Rotationsachse bzw. Drehachse A1 des Antriebs 4 angeordnet. Die Gewindehülse 15 besitzt ein Innengewinde 16, in das die Gewindespindel 17 eingeschraubt ist. Das Gewinde 16 ist insbesondere ein Mikrogewinde. Die Gewindehülse 15 ist mit einem oberen Drehlager 13 und einem unteren Drehlager 14 im Wesentlichen spielfrei am Träger 8 gelagert. Die Lager 13 und 14 sind insbesondere Wälzlager.

Der Antrieb 4 ist mit einer Dekodiervorrichtung 10 und einer hier nicht gezeigten Steuerung mit entsprechender Elektronik verbunden. Der Antrieb 4, der wie erwähnt vorzugsweise ein Drehmomentmotor ist, ist sehr stabil ausgebildet und kann sehr langsam gesteuert drehen. Je nach Drehrichtung bewegt sich die Gewindespindel 17 in Figur 1 nach oben oder nach unten. Pro Umdrehung des Rotors 12 bewegt sich die Gewindespindel 17 in Richtung der Rotationsachse A1, beispielsweise um einen halben mm. Entsprechend wird das Prüfelement 5 in Richtung der Rotationsachse A1 nach oben oder nach unten bewegt. Mit einer Bewegung nach unten kann das Prüfelement 5 gegen den Prüfling 3 bewegt und entsprechend seiner Härte in diesen eindringen. Mit der Kraftmessdose 21 kann genau die Kraft gemessen werden, mit welcher das Prüfelement 5 am Prüfling 3 angepresst wird. Die Anpresskraft kann beispielsweise bis etwa 250 Kg betragen.

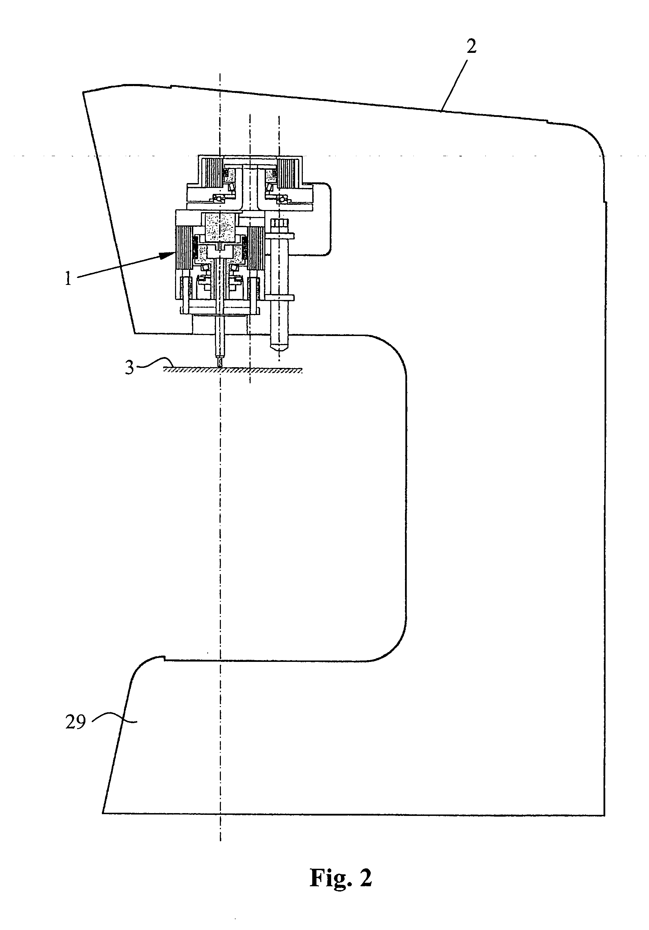

Am Gehäuse 6 ist ausserhalb eine Kamera 22 oder eine andere optische Beobachtungsvornchtung mittels Stegen 23 so befestigt, dass eine Beobachtungsachse A3 der Kamera 22 zur Drehachse A2 den gleichen Abstand hat wie die Drehachse A2 zur Rotationsachse A1. Die Achsen A1, A2 und A3 sind zudem parallel zueinander. Um einen Eindruck durch das Prüfelement 5 mittels der Kamera 22 zu beobachten und auszuwerten, ist am Gestell 8 ein Motor 24 angeordnet, mit dem die Kamera 22 um die Achse A2 in die Arbeitsposition des Prüfelements 5 schwenkbar ist. Der Motor 24 weist einen Stator 25 und einen Rotor 26 auf. Am Rotor 26 ist zur Befestigung des Gehäuses 8 ein Flansch 27 angeordnet. Der Stator 25 ist beispielsweise gemäss Figur 2 im Gestell 2 befestigt. Der Stator 25 kann aber auch beispielsweise einen Befestigungskonus aufweisen, so dass die Prüfmaschine 1 beispielsweise lösbar am Gestell einer Bohrmaschine oder einer Werkzeugmaschine befestigt werden kann.

Mit der genannten Steuervorrichtung kann eine Prüfung vollständig automatisch durchgeführt und ausgewertet werden.

### Bezugszeichenliste

- 1: Prüfinaschine
- 2: Gestell
- 3: Prüfling
- 4: Antrieb
- 5: Prüfelement (Eindringkörper)
- 6: Gehäuse
- 7: Gehäuseunterteil
- 8: Träger
- 9: Gehäuseoberteil
- 10: Dekodiervorrichtung
- 11: Statormagnet
- 12: Rotor
- 13: Drehlager
- 14: Drehlager
- 15: Gewindehülse
- 16: Gewinde
- 17: Gewindespindel
(Mikrometerschraube)
- 18: Führungshülse
- 19: Führungsstange
- 20: Halter
- 21: Kraftmessdose
- 22: Kamera
- 23: Steg
- 24: Motor
- 25: Stator
- 26: Rotor
- 27: Flansch

- 29: Fuss
- 30: Träger

- A1: Drehachse
- A2: Drehachse
- A3: Achse

## Patentansprüche

1. Prüfinaschine zur gewichtsbelasteten Prüfung von Werkstoffen, mit einem bewegbaren Prüfelement (5) und einer Belastungseinrichtung (4), die mit dem Prüfelement (5) in Verbindung steht und in einer ersten Stellung das Prüfelement (5) nicht belastet und in einer zweiten Stellung dieses belastet, **dadurch gekennzeichnet, dass** die Belastungseinrichtung (4) zum Bewegen des Prüfelements (5) einen Direktantrieb aufweist.

2. Prüfmaschine nach Anspruch 1, **dadurch gekennzeichnet, dass** der Direktantrieb einen Drehmomentmotor (Torque Motor) aufweist.

3. Prüfmaschine nach Anspruch 1 oder 2, **dadurch gekennzeichnet, dass** der Direktantrieb ein Mikrometergewinde (16) aufweist, mit dem das Prüfelement (5) linear bewegbar ist.

4. Prüfmaschine nach einem der Ansprüche 1 bis 3, **dadurch gekennzeichnet, dass** sie ein Gehäuse (6) aufweist, an dem ein Träger (8) befestigt ist, in welchem eine Gewindehülse (15) drehbar gelagert ist, in welche eine Schraube (17) und insbesondere eine Mikrometerschraube eingeschraubt ist.

5. Prüfmaschine nach Anspruch 4, **dadurch gekennzeichnet, dass** am Träger (8) ein Halter (20) verschieblich gelagert ist, der in den Richtungen der Rotationsachse (A1) des Direktantriebs verschiebbar und der fest mit der Schraube (17) verbunden ist.

6. Prüfinaschine nach Anspruch 5, **dadurch gekennzeichnet, dass** der Halter (20) mit einer Kraftmesseinrichtung (21) zusammenwirkt, die fest mit einem Träger (30) für das Prüfelement (5) verbunden ist.

7. Prüfinaschine nach Anspruch 6, **dadurch gekennzeichnet, dass** die Kraftmesseinrichtung (21) eine Kraftmessdose ist.

8. Prüfmaschine nach einem der Ansprüche 1 bis 7, **dadurch gekennzeichnet, dass** das Prüfelement (5) ein Eindringkörper ist.

9. Prüfinaschine nach einem der Ansprüche 1 bis 8, **dadurch gekennzeichnet, dass** sie einen weiteren Antrieb (24) aufweist, dessen Drehachse (A2) parallel und im Abstand zu einer Drehachse (A1) des Direktantriebs (4) angeordnet ist.

10. Prüfmaschine nach einem der Ansprüche 1 bis 9, **dadurch gekennzeichnet, dass** sie Befestigungsmittel zum lösbaren Befestigung beispielsweise am Gestell einer Bohrmaschine oder einer Werkzeugmaschine aufweist.
